# EUROPÄISCHE PATENTSCHRIFT

(11) **EP 2 642 619 B1**
(45) Veröffentlichungstag und Bekanntmachung des Hinweises auf die Patenterteilung: **14.05.2014**
(21) Anmeldenummer: 12160606.5
(22) Anmeldetag: 21.03.2012
(51) Int. Cl.: H01S 3/02, H01S 3/042, B23K 26/32

(54) **Laserresonatoranordnung mit lasergeschweißten optischen Komponenten**
Laser resonator assembly with laser welded optical components
Agencement de résonateur laser doté de composants optiques soudés au laser

(43) Veröffentlichungstag der Anmeldung: 25.09.2013
(73) Patentinhaber: Trumpf Laser Marking Systems AG, 7214 Grüsch (CH)
(72) Erfinder: Ziolek, Carsten, Dr., 7212 Seewis Dorf (CH); Zimer, Hagen, 07749 Jena (DE); Kruse, Dietmar, Dr., 7208 Malans (CH); Marzenell, Stefan, Dr., 7000 Chur (CH)
(74) Vertreter: Kohler Schmid Möbus

(56) Entgegenhaltungen:
- EP-A1- 0 917 263
- EP-A2- 1 492 208
- US-A- 5 170 409
- US-A- 5 793 540

## Beschreibung

Die vorliegende Erfindung betrifft eine Laserresonatoranordnung mit mehreren optischen Komponenten und mit einer Trägerplatte, auf der mindestens eine der optischen Komponenten befestigt ist.

Aus der US 5,170,409 ist eine Laserresonatoranordnung bekannt, bei der auf einer planen Trägerplatte aus Glas oder Quarzglas die Resonatorspiegelhalterungen aus Quarzglas mithilfe eines UV-Klebers aufgeklebt sind. Da die Trägerplatte und die Spiegelhalterungen aus Materialien mit verhältnismäßig niedrigen thermischen Ausdehnungskoeffizienten hergestellt werden können, wird die thermische Stabilität der Laserresonatoranordnung verbessert.

Bei einer anderen bekannten Laserresonatoranordnung werden die Oberflächen der zu montierenden optischen Komponenten metallisiert und anschließend mittels eines Lötpads auf eine Trägerplatte, welche über entsprechende metallische Gegenkontakte verfügt, gelötet. Allerdings verursacht die Metallisierung der zu lötenden Flächen hohe Kosten. Weiterhin können bei unterschiedlichen Ausdehnungskoeffizienten von optischer Komponente und Trägerplatte im Falle von thermischen Belastungen Materialspannungen auftreten, die zur Dejustage der optischen Komponenten führen oder sogar die Lötverbindung zerstören können.

Beim Aushärten des Klebers bzw. beim Erstarren des Lötpads treten Schrumpfeffekte auf, die zur Dejustage der optischen Komponenten führen können und eine automatische Montage nur bedingt zulassen. Des Weiteren besteht bei höheren Laserleistungen und geringer Baugröße die Gefahr, dass der Kleber bzw. das Lötpad durch thermische Belastung ausdampfen und den Resonatorraum verunreinigen. Dies führt zu einem instabilen Verhalten der Laserresonatoranordnung bis hin zum vollständigen Ausfall.

Zur Vermeidung des Verzugs aufgrund von Schrumpfeffekten sollte beim Kleben die Klebspaltdicke minimiert werden und kein Keilwinkel auftreten. Im Idealfall berühren sich optische Komponente und Trägerplatte flächig. Damit wird die Zahl der Freiheitsgrade, in der die optische Komponente relativ zur Trägerplatte positioniert werden kann, auf Bewegungen innerhalb der Berührungsfläche eingeschränkt. Beispielsweise aus US 6,320,706 und US2008/0260330 ist bekannt, dass die Verwendung von geeignet geformten Hilfselementen zwischen optischer Komponente und Trägerplatte diese Einschränkung im Wesentlichen aufhebt und dennoch sowohl zur optischen Komponente als auch zur Trägerplatte einen flächigen Berührungskontakt zulässt.

Es ist die Aufgabe der vorliegenden Erfindung, bei einer Laserresonatoranordnung der eingangs genannten Art Schrumpfeffekte, Materialspannungen und Ausdampfungen zu vermeiden und dadurch die Justage-Genauigkeit sowie die Langlebigkeit der optischen Komponenten zu erhöhen sowie ein zugehöriges Montageverfahren anzugeben.

Diese Aufgabe wird erfindungsgemäß gelöst durch eine Laserresonatoranordnung mit mehreren optischen Komponenten und mit einer Trägerplatte aus Glas, insbesondere Quarzglas, aus Glaskeramik oder aus kristalliner Keramik, auf der mindestens eine der optischen Komponenten befestigt ist, wobei die mindestens eine auf der Trägerplatte befestigte optische Komponente aus Glas, insbesondere Quarzglas, aus Glaskeramik oder aus kristalliner Keramik gebildet ist und mit der Trägerplatte entweder unmittelbar durch mindestens eine Laserschweißverbindung stoffschlüssig verbunden oder mittels eines Zwischenelements aus Glas, insbesondere Quarzglas, aus Glaskeramik oder aus kristalliner Keramik befestigt ist, das jeweils durch mindestens eine Laserschweißverbindung sowohl mit der mindestens einen optischen Komponente als auch mit der Trägerplatte stoffschlüssig verbunden ist.

Erfindungsgemäß sind eine oder mehrere aus Glas, Glaskeramik öder kristalliner Keramik gebildete optische Komponenten der Laserresonatoranordnung durch Laserstrahlschweißen (auch als "Laserstrahl-Glasschweißen" bezeichnet) an die ebenfalls aus Glas, Glaskeramik oder kristalliner Keramik gebildete Trägerplatte bzw. das Zwischenelement montiert. Bei den lasergeschweißten optischen Komponenten kann es sich beispielsweise um Resonatorspiegel, ein Festkörper-Lasermedium, eine Linse, insbesondere eine Gradientenindex-Linse zum Einkoppeln von Pumplicht, und ggf. einen optischen Modulator handeln, die alle aus Glas bzw. Quarzglas bzw. kristalliner Keramik (z.B. BK7, Yb:Glas, fused silica, SF57, keramischer Nd:YAG) gefertigt werden können. Die Trägerplatte ist vorzugsweise aus einer Glaskeramik, wie z.B. Zerodur oder ULE.

Das Laserstrahl-Glasschweißen wurde bisher dazu verwendet, Glasfasern aus Kieselglas mit optischen Gläsern örtlich selektiv zu verschweißen. Voraussetzung dafür ist, dass die Fügestelle dem Laserstrahl zugänglich ist. So können z.B. Lichtwellenleiter-Fasern an optisch aktive bzw. passive Komponenten aus Glas mit hoher mechanischer und optischer Güte stoffschlüssig gefügt werden. Der für das Verschweißen der Komponenten erforderliche Wärmeeintrag erfolgt mithilfe eines CO₂-Lasers. Das Laserstrahl-Glasschweißen von Glasfasern an Substrate ist beispielsweise in L. Schaefer, M. Schmidt, Welding of glass fibres onto lagre-scale substrates with high mechanical stability and optical quality, Physics Procedia 5 (2010) Seiten 145-152 beschrieben.

Besonders bevorzugt sind alle optischen Komponenten aus Glas, insbesondere Quarzglas, aus Glaskeramik oder aus kristalliner Keramik gebildet und durch Schweißverbindungen stoffschlüssig mit der Trägerplatte bzw. mit Zwischenelementen verbunden. Da alle optischen Komponenten lasergeschweißt sind, sind in der Laserresonatoranordnung weder Lot noch Kleber vorhanden.

Weiterhin bevorzugt sind alle stoffschlüssig mit der Trägerplatte verbundenen optischen Komponenten aus Werkstoffen mit gleichen oder ähnlichen thermischen Ausdehnungskoeffizienten gebildet wie die Trägerplatte. Der ähnliche Ausdehnungskoeffizient von Trägerplatte und optischen Komponenten resultiert in nahezu spannungsfreien stoffschlüssigen Verbindungen auch bei thermischer Belastung. Besonders bevorzugt sind die optischen Komponenten aus demselben Werkstoff gebildet wie die Trägerplatte.

Die Erfindung betrifft in einem weiteren Aspekt auch ein Verfahren zum Fertigen einer wie oben ausgebildeten Laserresonatoranordnung, wobei erfindungsgemäß dass eine an der Trägerplatte zu befestigende optische Komponente an der Trägerplatte positioniert und anschließend mithilfe eines Laserstrahls, insbesondere eines CO₂-Laserstrahls, mit der Trägerplatte entweder unmittelbar stoffschlüssig verschweißt oder mittels eines jeweils stoffschlüssig verschweißten Zwischenelements verbunden wird.

Die optischen Komponenten werden einzeln zuerst auf der Trägerplatte positioniert und anschließend durch Laserstrahl-Glasschweißen fixiert. Die Positionierung der optischen Komponenten kann passiv mittels Anschlägen auf der Trägerplatte erfolgen oder kann alternativ unter Verwendung verschiedenster Messmethoden (z.B. kamerabasierte Verfahren, Autokollimation, Justage von Reflexen eines Prüflasers, Leistungsmaximierung des Laserlichts) manuell gesteuert oder auch teil- oder vollautomatisiert erfolgen. Den für das Glasschweißen erforderlichen lokalen Energieeintrag liefert ein Laser, bevorzugt ein CO₂-Laser, dessen Laserstrahl mittels einer geeigneten Ablenkvorrichtung über die jeweiligen Fügekonturen der einzelnen optischen Komponenten bewegt wird. Die Information über die Position der Fügekonturen kann der Bediener mittels geeigneter Messinstrumente ermitteln und an die Ablenkeinrichtung weitergeben. Alternativ können geeignete Messinstrumente, wie z.B. ein Kamerasystem, die benötigten Messdaten teil- oder vollautomatisiert erfassen und an die Ablenkeinrichtung weitergeben. Bei Verwendung eines CO₂-Lasers mit einer Wellenlänge von 10,6 µm beträgt die Aufschmelztiefe typischerweise nur ca. 10µm. Bei Verwendung anderer Laser können die Eindringtiefe der Laserstrahlung und damit die Aufschmelztiefe dadurch optimiert werden, dass das verwendete Glas mit Fremdatomen dotiert wird, die die Absorption der für das Laserstrahlschweißen verwendeten Laserstrahlung erhöhen. Die Aufschmelztiefe hängt auch von der Größe der Komponenten und der Leistung des verwendeten Lasers ab und sollte nicht größer als ca. 500µm sein und bevorzugt zwischen 10 und 30 µm liegen.

Zur besseren Wärmeabfuhr kann insbesondere das Festkörper-Lasermedium auf der schlecht wärmeleitenden Trägerplatte zusätzlich kontaktgekühlt werden, um die während des Laserbetriebs anfallende Wärme effizient abzuführen. Dasselbe gilt für einen aktiven Güteschalter, wie z.B. einen akustooptischen Modulator.

Die Vorteile der erfindungsgemäßen Laserresonatoranordnung und des zugehörigen Fertigungsverfahrens sind im Folgenden nochmals zusammengefasst:
- Das Glasschweißen ist kostengünstiger als das Lötverfahren, bei dem die Optiken oberflächlich metallisiert werden müssen.
- Die Aufschmelztiefe beim Glasschweißen ist sehr gering (ca. 10µm - 30µm). Die lasergeschweißten Komponenten werden nur sehr lokal erwärmt. Deshalb spielt Schrumpf im Vergleich zu Löt- und Klebeverfahren eine geringe Rolle.
- Das Risiko von Ausgasung, das bei Löt- oder Klebverbindungen je nach verwendetem Lot/Flussmittel bzw. Klebstoff bestehen kann, entfällt.
- Die geschweißten stoffschlüssigen Verbindungen sind unempfindlicher gegenüber Dejustage als herkömmliche mechanische Halter.
- Das Fertigungsverfahren eignet sich zur Automatisierung.
- Angepasste thermische Ausdehnungskoeffizienten von Trägerplatte und optischen Komponenten führen zu spannungsfreien Verbindungen auch bei thermischer Belastung.
- Ein geringer thermischer Ausdehnungskoeffizient der Trägerplatte führt zu einem thermisch stabilen Aufbau.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: einen Festkörperlaser mit der erfindungsgemäßen Laserresonatoranordnung, die mehrere durch Laserschweißen stoffschlüssig mit einer Trägerplatte verbundene optische Komponenten aufweist;
- Fig. 2: das Ausbilden der stoffschlüssigen Laserschweißverbindung zwischen der Trägerplatte und einer der optischen Komponenten mittels eines Laserstrahls; und
- Fig. 3: eine weitere Ausführungsvariante, bei der eine der optischen Komponenten mittels eines lasergeschweißten Zwischenelements mit der Trägerplatte verbunden ist.

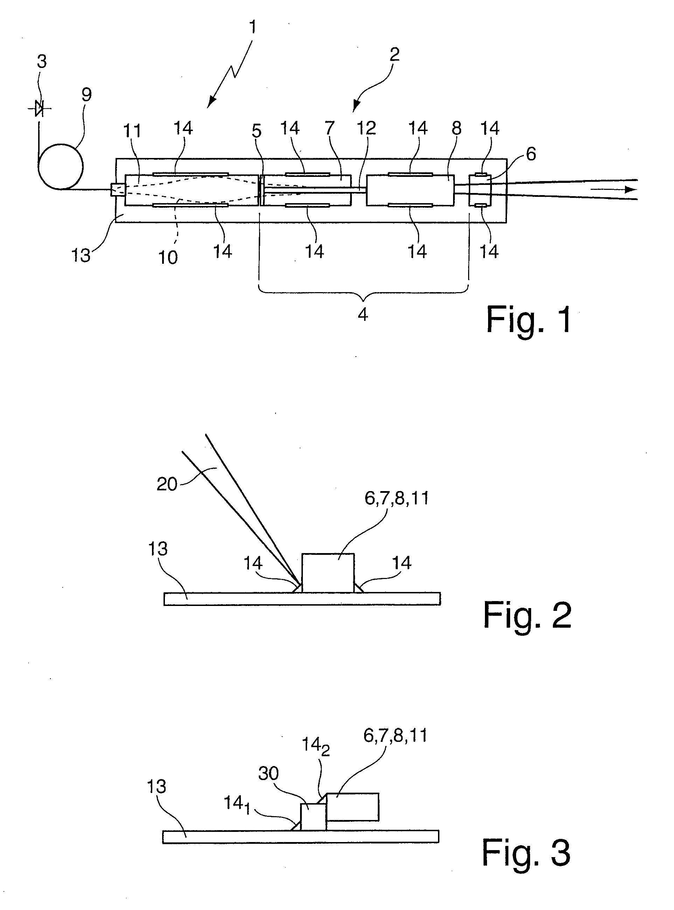

Der in **Fig. 1** gezeigte Festkörperlaser **1** weist eine Laserresonatoranordnung **2** und eine Laserdiode **3** zum optischen Pumpen der Laserresonatoranordnung 2 auf.

Die Laserresonatoranordnung 2 umfasst einen Laserresonator **4,** der durch einen hochreflektiven HR-Endspiegel **5** und einen Auskoppelspiegel **6** definiert ist, ein im Laserresonator 4 angeordnetes Festkörper-Lasermedium **7** und einen im Laserresonator 4 zwischen Lasermedium 7 und dem Auskoppelspiegel 6 angeordneten optischen Modulator **8.**

Als Laserdiode 3 wird eine über eine Faser **9** angekoppelte Laserdiode hoher Brightness verwendet. Die hohe Brightness ermöglicht hohe Pumpleistungsdichten im Lasermedium 7. Zur Fokussierung des gestrichelt dargestellten Pumplichts **10** der Laserdiode 3 in das Lasermedium 7 ist das Faserende der fasergekoppelten Laserdiode 3 an eine Gradientenindex-Linse (GRIN-Linse) **11** aus Quarzglas gespleißt. Dadurch muss nur diese GRIN-Linse 11 korrekt positioniert werden, wodurch eine separate Positionierung und Halterung des Faserendes nicht erforderlich sind.

Das Lasermedium 7 kann beispielsweise aus Nd:Glas, Er:Glas oder Yb:Glas bestehen.

Diejenige Stirnseite des Lasermediums 7, die der GRIN-Linse 11 zugewandt ist, ist mit einer dielektrischen Beschichtung versehen, welche für das Pumplicht 10 transmittierend und für das Laserlicht **12** hochreflektierend ist und somit den HR-Endspiegel 5 darstellt. Der Auskoppelspiegel 6 wird durch eine separate Optik aus Quarzglas gebildet, die auf der dem Lasermedium 7 zugewandten Stirnseite eine dielektrische Beschichtung besitzt, welche für das Laserlicht 12 teilreflektierend ist und somit den Auskoppelspiegel 6 darstellt.

Der optische Modulator 8 ist als aktiver Güteschalter, beispielsweise als akustooptischer Modulator oder als elektrooptischer Modulator, oder als passiver Güteschalter ausgeführt.

Im gezeigten Ausführungsbeispiel sind alle optischen Komponenten der Laserresonatoranordnung 2, also der Auskoppelspiegel 6, das Lasermedium 7 mit dem daran vorgesehenen HR-Endspiegel 5, der Güteschalter 8 und auch die GRIN-Linse 11, auf einer Trägerplatte **13** aus einer Glaskeramik, wie z.B. Zerodur oder ULE ((Ultra Low Expansion) Titanium Silicatglas), jeweils durch Schweißverbindungen **14** stoffschlüssig montiert. Beide Materialgruppen zeichnen sich durch sehr niedrige thermische Ausdehnungskoeffizienten aus, wodurch die Laserresonatoranordnung 2 sehr temperaturstabil aufgebaut werden kann. Jede optische Komponente 6, 7, 8, 11 ist an der Trägerplatte 13 durch mindestens eine Laserschweißnaht, bevorzugt zwei Laserschweißnähte 14, befestigt.

Zum Ausbilden der Laserschweißnähte 14 werden der Auskoppelspiegel 6, das Lasermedium 7 mit dem daran vorgesehenen HR-Endspiegel 5, der Güteschalter 8 und die GRIN-Linse 11 auf der Trägerplatte 13 positioniert und dann, wie in **Fig. 2** gezeigt, jeweils an ihren beiden Längsrändern mittels eines Lasers **20**, beispielsweise eines CO₂-Lasers, mit der Trägerplatte 13 verschweißt. Die Aufschmelztiefe der Laserschweißnähte 14 in der Trägerplatte 13 und in den damit stoffschlüssig verbundenen optischen Komponenten 6, 7, 8, 11 beträgt dabei lediglich ca. 10µm bis ca. 30µm.

In **Fig. 3** ist die optische Komponente 6, 7, 8, 11 mit der Trägerplatte 13 mittels eines Zwischenelements **30** aus Glas, insbesondere Quarzglas, aus Glaskeramik oder aus kristalliner Keramik befestigt, das über jeweils eine Laserschweißverbindung **14**₁, **14₂** sowohl mit der optischen Komponente 5, 6, 7, 8, 11 als auch mit der Trägerplatte 13 stoffschlüssig verbunden ist.

## Patentansprüche

1. Laserresonatoranordnung (2) mit mehreren optischen Komponenten (5, 6, 7, 8, 11) und mit einer Trägerplatte (13) aus Glas, insbesondere Quarzglas, aus Glaskeramik oder aus kristalliner Keramik, auf der mindestens eine der optischen Komponenten (5, 6, 7, 8, 11) befestigt ist,
wobei die mindestens eine auf der Trägerplatte (13) befestigte optische Komponente (5, 6, 7, 8, 11) aus Glas, insbesondere Quarzglas, aus Glaskeramik oder aus kristalliner Keramik gebildet ist und mit der Trägerplatte (13) entweder unmittelbar durch mindestens eine Laserschweißverbindung (14) stoffschlüssig verbunden oder mittels eines Zwischenelements (30) aus Glas, insbesondere Quarzglas, aus Glaskeramik oder aus kristalliner Keramik befestigt ist, das jeweils durch mindestens eine Laserschweißverbindung (14₁, 14₂) sowohl mit der mindestens einen optischen Komponente (5, 6, 7, 8, 11) als auch mit der Trägerplatte (13) stoffschlüssig verbunden ist.

2. Laserresonatoranordnung nach Anspruch 1, **dadurch gekennzeichnet, dass** die mindestens eine auf der Trägerplatte (13) befestigte optische Komponente ein Resonatorspiegel (5, 6) ist.

3. Laserresonatoranordnung nach Anspruch 1 oder 2, **dadurch gekennzeichnet, dass** die mindestens eine auf der Trägerplatte (13) befestigte optische Komponente ein Festkörper-Lasermedium (7) ist.

4. Laserresonatoranordnung nach einem der vorhergehenden Ansprüche,
**dadurch gekennzeichnet, dass** die mindestens eine auf der Trägerplatte (13) befestigte optische Komponente ein optischer Modulator (8) ist.

5. Laserresonatoranordnung nach einem der vorhergehenden Ansprüche,
**dadurch gekennzeichnet, dass** die mindestens eine auf der Trägerplatte (13) befestigte optische Komponente eine zum Einkoppeln von Pumplicht (10) vorgesehene Einkoppeloptik (11), insbesondere eine Gradientenindex-Linse, ist.

6. Laserresonatoranordnung nach einem der vorhergehenden Ansprüche, **dadurch gekennzeichnet, dass** alle optischen Komponenten (5, 6, 7, 8, 11) aus Glas, insbesondere Quarzglas, aus Glaskeramik oder aus kristalliner Keramik gebildet sind und durch Laserschweißverbindungen (14) stoffschlüssig mit der Trägerplatte (13) oder einem Zwischenelement (30) verbunden sind.

7. Laserresonatoranordnung nach einem der vorhergehenden Ansprüche, **dadurch gekennzeichnet, dass** eine oder mehrere der stoffschlüssig mit der Trägerplatte (13) oder dem Zwischenelement (30) verbundenen optischen Komponenten (5, 6, 7, 8, 11) aus Werkstoffen mit gleichen oder nahezu gleichen thermischen Ausdehnungskoeffizienten wie die Trägerplatte (13) oder das Zwischenelement (30) gebildet sind.

8. Laserresonatoranordnung nach einem der vorhergehenden Ansprüche, **dadurch gekennzeichnet, dass** eine Laserschweißverbindung (14; 14₁, 14₂) durch mindestens eine Laserschweißnaht, welche entlang der Fügekontur der an der Trägerplatte (13) oder dem Zwischenelement (30) angeordneten optischen Komponente (5, 6, 7, 8, 11) verläuft, gebildet ist.

9. Laserresonatoranordnung nach einem der vorhergehenden Ansprüche, **dadurch gekennzeichnet, dass** die Aufschmelztiefe der Laserschweißverbindung (14) in der Trägerplatte (13) und in der mindestens einen damit stoffschlüssig verbundenen optischen Komponente (5, 6, 7, 8, 11) höchstens ca. 500µm, bevorzugt zwischen 10µm und 30µm, beträgt.

10. Laserresonatoranordnung nach einem der vorhergehenden Ansprüche, **dadurch gekennzeichnet, dass** die Trägerplatte (13), das Zwischenelement (30) und/oder mindestens eine der damit stoffschlüssig verbundenen optischen Komponenten (5, 6, 7, 8, 11) derart mit Fremdatomen dotiert ist, dass sich eine für die Laserschweißverbindung (14; 14₁, 14₂) optimale Eindringtiefe der für das Laserstrahlschweißen verwendeten Laserstrahlung ergibt.

11. Laserresonatoranordnung nach einem der vorhergehenden Ansprüche,
**dadurch gekennzeichnet, dass** mindestens eine der optischen Komponenten (5, 6, 7, 8, 11), bevorzugt das Lasermedium (7) oder der optische Modulator (8), neben der Trägerplatte (13) in thermischem Kontakt zu mindestens einer weiteren Oberfläche steht, über die die optische Komponente gekühlt wird.

12. Verfahren zum Fertigen einer Laserresonatoranordnung (2) nach einem der vorhergehenden Ansprüche,
**dadurch gekennzeichnet,**
**dass** eine an der Trägerplatte (13) zu befestigende optische Komponente (5, 6, 7, 8, 11) an der Trägerplatte (13) oder dem daran laserverschweißten Zwischenelement (30) positioniert und anschließend mithilfe eines Laserstrahls (20), insbesondere eines CO₂-Laserstrahls, mit der Trägerplatte (13) oder dem Zwischenelement (30) stoffschlüssig verschweißt wird.

13. Verfahren nach Anspruch 12, **dadurch gekennzeichnet, dass** die an der Trägerplatte (13) zu befestigende optische Komponente (5, 6, 7, 8, 11) entlang ihrer randseitigen Fügekontur mithilfe des Laserstrahls (20) stoffschlüssig mit der Trägerplatte (13) oder dem Zwischenelement (30) verschweißt wird.

## Claims

1. Laser resonator assembly (2) comprising a plurality of optical components (5, 6, 7, 8, 11) and a support plate (13) of glass, in particular quartz glass, glass ceramics or crystalline ceramics, to which at least one of the optical components (5, 6, 7, 8, 11) is fixed,
wherein the at least one optical component (5, 6, 7, 8, 11) that is fixed to the support plate (13) is formed from glass, in particular quartz glass, glass ceramics or crystalline ceramics and is either connected to the support plate (13) in a material-bonding manner directly by means of at least one laser weld joint (14) or fixed to the support plate (13) by means of an intermediate element (30) of glass, in particular quartz glass, glass ceramics or crystalline ceramics, the intermediate element (30) being connected in a material-bonding manner both to the at least one optical component (5, 6, 7, 8, 11) and to the support plate (13) by means of at least one laser weld joint (14₁, 14₂).

2. Laser resonator assembly according to claim 1, **characterized in that** the at least one optical component that is fixed to the support plate (13) is a resonator mirror (5, 6).

3. Laser resonator assembly according to claim 1 or 2, **characterized in that** the at least one optical component that is fixed to the support plate (13) is a solid state laser medium (7).

4. Laser resonator assembly according to any one of the preceding claims, **characterized in that** the at least one optical component that is fixed to the support plate (13) is an optical modulator (8).

5. Laser resonator assembly according to any one of the preceding claims, **characterized in that** the at least one optical component that is fixed to the support plate (13) is an input optics (11), in particular a gradient index lens, provided for coupling in pump light (10).

6. Laser resonator assembly according to any one of the preceding claims, **characterized in that** all optical components (5, 6, 7, 8, 11) are formed from glass, in particular quartz glass, glass ceramics or crystalline ceramics and are connected in a material-bonding manner to the support plate (13) or an intermediate element (30) by means of laser weld joints (14).

7. Laser resonator assembly according to any one of the preceding claims, **characterized in that** one or more of the optical components (5, 6, 7, 8, 11) that are connected in a material-bonding manner to the support plate (13) or the intermediate element (30) are formed from materials having the same or almost the same thermal expansion coefficients as the support plate (13) or the intermediate element (30).

8. Laser resonator assembly according to any one of the preceding claims, **characterized in that** a laser weld joint (14; 14₁, 14₂) is formed by at least one laser weld seam which extends along the joining contour of the optical component (5, 6, 7, 8, 11) arranged on the support plate (13) or on the intermediate element (30).

9. Laser resonator assembly according to any one of the preceding claims, **characterized in that** the depth of fusion of the laser weld joint (14) in the support plate (13) and in the at least one optical component (5, 6, 7, 8, 11) that is connected thereto in a material-bonding manner is at most approximately 500µm, preferably between 10µm and 30µm.

10. Laser resonator assembly according to any one of the preceding claims, **characterized in that** the support plate (13), the intermediate element (30) and/or at least one of the optical components (5, 6, 7, 8, 11) that are connected thereto in a material-bonding manner are doped with foreign atoms in such a manner that an optimum insertion depth of the laser radiation used for laser welding is obtained for the laser weld joint (14; 14₁, 14₂).

11. Laser resonator assembly according to any one of the preceding claims, **characterized in that** in addition to the support plate (13) at least one of the optical components (5, 6, 7, 8, 11), preferably the laser medium (7) or the optical modulator (8), is also in thermal contact with at least one further surface via which the optical component is cooled.

12. Method for manufacturing a laser resonator assembly (2) according to any one of the preceding claims, **characterized in that** an optical component (5, 6, 7, 8, 11) to be fixed to the support plate (13) is positioned on the support plate (13) or on the intermediate element (30) which is laser-welded thereto, and is subsequently welded in a material-bonding manner to the support plate (13) or the intermediate element (30) by means of a laser beam (20), in particular a CO₂ laser beam.

13. Method according to claim 12, **characterized in that** the optical component (5, 6, 7, 8, 11) to be fixed to the support plate (13) is welded along its joining edge contour in a material-bonding manner to the support plate (13) or the intermediate element (30) by means of the laser beam (20).

## Revendications

1. Agencement de résonateur laser (2) comportant plusieurs composants optiques (5, 6, 7, 8, 11) et une plaque support (13) en verre, en particulier en verre de quartz, en vitrocéramique ou en céramique cristalline, sur laquelle au moins un des composants optiques (5, 6, 7, 8, 11) est fixé,
ledit au moins un composant optique (5, 6, 7, 8, 11) fixé sur la plaque support (13) étant constitué de verre, en particulier de verre de quartz, de vitrocéramique ou de céramique cristalline, et étant relié par liaison de matière à la plaque support (13) soit directement par au moins un joint soudé au laser (14), soit au moyen d'un élément intermédiaire (30) en verre, en particulier en verre de quartz, en vitrocéramique ou en céramique cristalline, lequel est relié par liaison de matière chaque fois par au moins un joint soudé au laser (14₁, 14₂) aussi bien audit au moins un composant optique (5, 6, 7, 8, 11) qu'à la plaque support (13).

2. Agencement de résonateur laser selon la revendication 1, **caractérisé en ce que** ledit au moins un composant optique fixé sur la plaque support (13) est un miroir de résonateur (5, 6).

3. Agencement de résonateur laser selon la revendication 1 ou 2, **caractérisé en ce que** ledit au moins un composant optique fixé sur la plaque support (13) est un milieu laser solide (7).

4. Agencement de résonateur laser selon l'une des revendications précédentes, **caractérisé en ce que** ledit au moins un composant optique fixé sur la plaque support (13) est un modulateur optique (8).

5. Agencement de résonateur laser selon l'une des revendications précédentes, **caractérisé en ce que** ledit au moins un composant optique fixé sur la plaque support (13) est une optique de couplage (11) prévue pour coupler une lumière de pompage (10), en particulier une lentille à gradient d'indice.

6. Agencement de résonateur laser selon l'une des revendications précédentes, **caractérisé en ce que** tous les composants optiques (5, 6, 7, 8, 11) sont constitués de verre, en particulier de verre de quartz, de vitrocéramique ou de céramique cristalline, et reliés par liaison de matière à la plaque support (13) ou à un élément intermédiaire (30) au moyen de joints soudés au laser (14).

7. Agencement de résonateur laser selon l'une des revendications précédentes, **caractérisé en ce qu'**un ou plusieurs des composants optiques (5, 6, 7, 8, 11) reliés par liaison de matière à la plaque support (13) ou à l'élément intermédiaire (30) sont constitués de matériaux de même ou quasiment même coefficient de dilatation thermique que la plaque support (13) ou l'élément intermédiaire (30).

8. Agencement de résonateur laser selon l'une des revendications précédentes, **caractérisé en ce qu'**un joint soudé au laser (14 ; 14₁, 14₂) est formé par au moins une soudure laser qui s'étend le long du contour d'assemblage des composants optiques (5, 6, 7, 8, 11) disposés sur la plaque support (13) ou l'élément intermédiaire (30).

9. Agencement de résonateur laser selon l'une des revendications précédentes, **caractérisé en ce que** la profondeur de fusion du joint soudé au laser (14) dans la plaque support (13) et dans ledit au moins un composant optique (5, 6, 7, 8, 11) relié à celle-ci par liaison de matière est au maximum d'environ 500 µm, de préférence comprise entre 10 µm et 30 µm.

10. Agencement de résonateur laser selon l'une des revendications précédentes, **caractérisé en ce que** la plaque support (13), l'élément intermédiaire (30) et/ou au moins un des composants optiques (5, 6, 7, 8, 11) reliés à ceux-ci par liaison de matière sont dopés avec des atomes étrangers de façon qu'il en résulte une profondeur de pénétration optimale pour le joint soudé au laser (14 ; 14₁, 14₂) du rayonnement laser utilisé pour le soudage au laser.

11. Agencement de résonateur laser selon l'une des revendications précédentes, **caractérisé en ce qu'**au moins un des composants optiques (5, 6, 7, 8, 11), de préférence le milieu laser (7) ou le modulateur optique (8), est en contact thermique, en plus de la plaque support (13), avec au moins une autre surface par l'intermédiaire de laquelle le composant optique est refroidi.

12. Procédé pour réaliser un agencement de résonateur laser (2) selon l'une des revendications précédentes,
**caractérisé en ce**
**qu'**un composant optique (5, 6, 7, 8, 11) à fixer à la plaque support (13) est positionné sur la plaque support (13) ou sur l'élément intermédiaire (30) soudé au laser sur celle-ci et ensuite soudé par liaison de matière avec la plaque support (13) ou l'élément intermédiaire (30) à l'aide d'un rayon laser (20), en particulier d'un rayon laser au CO₂.

13. Procédé selon la revendication 12, **caractérisé en ce que** le composant optique (5, 6, 7, 8, 11) à fixer sur la plaque support (13) est soudé par liaison de matière avec la plaque support (13) ou l'élément intermédiaire (30) le long de son contour d'assemblage périphérique à l'aide du rayon laser (20).
